# EUROPEAN PATENT APPLICATION

(11) **EP 2 189 713 A1**
(43) Date of publication of application: **26.05.2010**
(21) Application number: 08827177.0
(22) Date of filing: 31.07.2008
(51) Int. Cl.: F21V 8/00, F21Y 103/00

(54) **ILLUMINATING DEVICE**

(30) Priority: 09.08.2007 JP 2007208159
(71) Applicant: NEC Lighting, Ltd., Shinagawa-ku Tokyo 141-0032 (JP)
(72) Inventor: KASUYA, Yasunobu, Tokyo 141-0032 (JP)
(74) Representative: Reeve, Nicholas Edward
(86) International application number: PCT/JP2008/063742
(87) International publication number: WO 2009/020037

(57) **Abstract**

An illuminating device according to the present invention includes light guide plate 1, cold cathode fluorescent lamp 2 disposed to face a rear surface of light guide plate 1, and prism 3 that allows light emitted from cold cathode fluorescent lamp 2 to be incident on light guide plate 1, and prism 3 is disposed in a region inward from an edge of light guide plate 1.

## Description

### Technical Field

The present invention relates to an illuminating device that includes a cold cathode fluorescent lamp.

### Background Art

A cold cathode fluorescent lamp (CCFL) advantageously has a smaller tube diameter and a longer lifetime than a hot cathode fluorescent lamp. Specifically, in general, the cold cathode fluorescent lamp has a tube diameter of 1.8 to 5.0 mm and a lifetime of about 40 to 60 thousands hours. The cold cathode fluorescent lamp having the advantages described above has been used as a light source of a backlight.

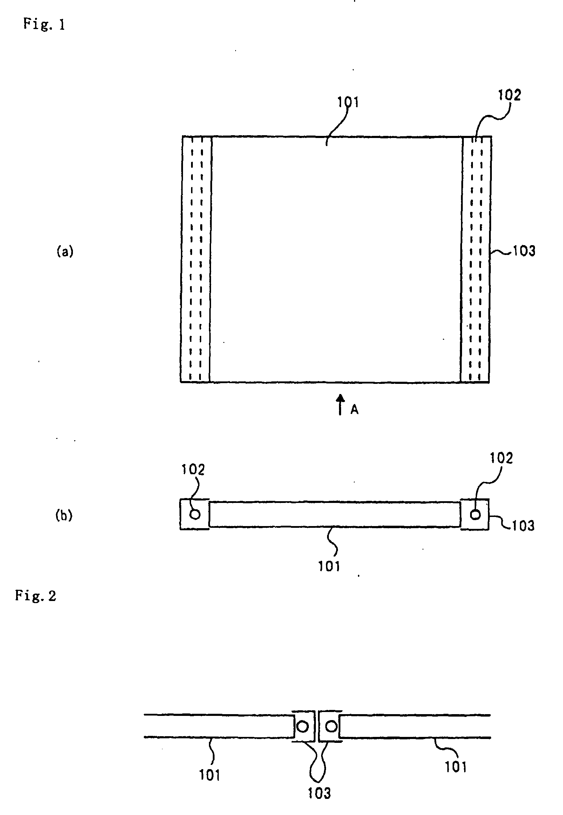

Japanese Patent Laid-Open NO. 2002-304909 discloses an illuminating device that uses the cold cathode fluorescent lamp as a light source. The illuminating device is used as a backlight for a liquid crystal panel. Figure 1 includes diagrams showing a backlight using the cold cathode fluorescent lamp as a light source. Specifically, Figure 1(a) is a plan view of a backlight including a cold cathode fluorescent lamp as a light source, and Figure 1(b) is an end view of the backlight shown in Figure 1(a), viewed from the direction of arrow A.

The backlight shown in Figure 1 includes light guide plate 101, cold cathode fluorescent lamps 102 and reflectors 103. Cold cathode fluorescent lamps 102 are disposed along a pair of parallel end surfaces of light guide plate 101. Each reflector 103 surrounds one cold cathode fluorescent lamp 102 on three sides. Part of light emitted from cold cathode fluorescent lamp 102 is directly incident on the end surface of light guide plate 101. Other part of the light emitted from cold cathode fluorescent lamp 102 is incident on the end surface of light guide plate 101 after being reflected by reflector 103. In any case, the incident light on light guide plate 101 propagates through light guide plate 101 successively reflecting and is emitted from a front surface of light guide plate 101. That is, light guide plate 101 provides surface emission.

As described above, the cold cathode fluorescent lamp advantageously has a smaller tube diameter and a longer lifetime than the hot cathode fluorescent lamp. Therefore, the illuminating device that uses the cold cathode fluorescent lamp as a light source can be installed in a narrow space. In addition, the number of lamp replacements can be decreased. Thus, application of the cold cathode fluorescent lamp to the illuminating device has been contemplated. For example, if an array of a plurality of illuminating devices shown in Figure 1 is installed on a wall or ceiling, surface illumination can be provided on the surface of the wall or ceiling.

### Disclosure of the Invention

Figure 2 shows an arrangement of a plurality of illuminating device shown in Figure 1. If a plurality of illuminating device is arranged side by side, reflectors 103 of the respective illuminating devices are interposed between adjacent illuminating devices (light guide plates 101). As a result, a dark region occurs between adjacent illuminating devices (light guide plates 101).

An object of the present invention is to provide an illuminating device that does not produce a dark region even when a plurality of the illuminating devices is arranged side by side.

In order to attain the object described above, an illuminating device according to the present invention comprises: a light guide plate; a cold cathode fluorescent lamp disposed to face a rear surface of the light guide plate; and a prism that allows light emitted from the cold cathode fluorescent lamp to be incident on the light guide plate, in which the prism is disposed in a region inward from an edge of the light guide plate.

According to the present invention, there can be provided an illuminating device that does not produce a dark region even when a plurality of the illuminating devices is arranged side by side.

The above-described and other objects, features and advantages of the present invention will be apparent from the following description and the accompanying drawings showing the present invention for illustrative purposes.

### Brief Description of the Drawings

Figure 1 includes schematic diagrams showing a backlight including a cold cathode fluorescent lamp as a light source;
Figure 2 is a schematic diagram showing an arrangement of the illuminating devices shown in Figure 1;
Figure 3 is a schematic diagram showing an illuminating device according to an exemplary embodiment of the present invention; and
Figure 4 is a schematic diagram showing a modification of the illumination device shown in Figure 3.

### Exemplary Embodiment of the Invention

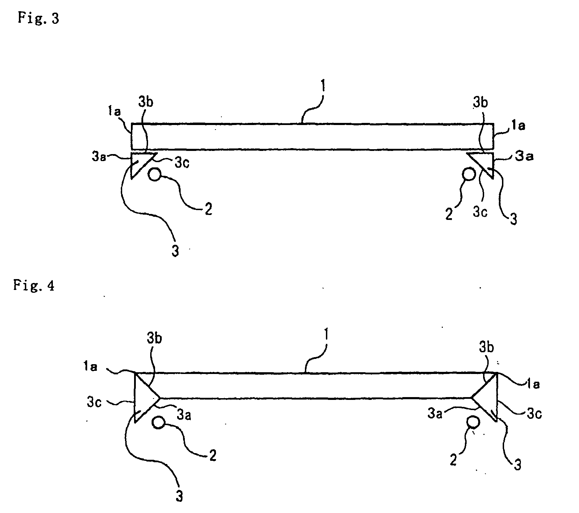

An exemplary embodiment of the present invention will be described. Figure 3 is a schematic diagram showing an illuminating device according to the exemplary embodiment of the present invention.

The illuminating device according to this exemplary embodiment comprises light guide plate 1, prism 3 and cold cathode fluorescent lamp 2. Light guide plate 1 is made of a translucent material, such as acrylic. Prism 3 and cold cathode fluorescent lamp 2 are disposed on the side of a rear surface of light guide plate 1. Prism 3 has a triangular cross section defined by first surface 3a, second surface 3b and third surface 3c. First surface 3a of prism 3 is flush with end surface 1a of light guide plate 1, and second surface 3b of prism 3 is opposed to the rear surface of light guide plate 1. Cold cathode fluorescent lamp 2 is disposed to face third surface 3c of prism 3. In this exemplary embodiment, as shown in Figure 3, there is a gap between second surface 3b of prism 3 and the rear surface of light guide plate 1. However, second surface 3b of prism 3 and the rear surface of light guide plate 1 can be in intimate contact with each other.

Part of light emitted from cold cathode fluorescent lamp 2 is incident on third surface 3c of prism 3. The incident light on prism 3 is deflected in prism 3 and emitted from second surface 3b. The light emitted from second surface 3b of prism 3 is incident on the rear surface of light guide plate 1 and then propagates through light guide plate 1 successively reflecting. Then, when the angle of incidence of the light propagating through light guide plate 1 with respect to the interface between light guide plate 1 and air becomes smaller than a critical angle, the light is emitted from light guide plate 1. Thus, the entire surface of light guide plate 1 emits light. Part of the light emitted from cold cathode fluorescent lamp 2 that is directly incident on light guide plate 1 also contributes to the surface emission of light guide plate 1.

First surface 3 a of prism 3 is flush with end surface 1a of light guide plate 1. Therefore, prism 3 is disposed in a region inward from the edge of light guide plate 1. In other words, prism 3 does not project outwardly beyond the edge of light guide plate 1. Therefore, when a plurality of illuminating devices according to this exemplary embodiment is arranged, the end surfaces of light guide plates 1 of the illuminating devices can be brought into intimate contact with each other. Since the end surfaces of the light guide plates 1 of adjacent illuminating devices are in intimate contact with each other, a dark region can be prevented from occurring between the adjacent illuminating devices. Therefore, by installing an array of a plurality of illuminating devices according to this exemplary embodiment on a wall or ceiling, uniform illumination can be provided over the entire surface of the wall or ceiling.

Conditions including the number of surfaces and the angles between the surfaces of prism 3, the position and the angle of prism 3 with respect to light guide plate 1, and the position of cold cathode fluorescent lamp 2 with respect to prism 3 can be appropriately set taking the refractive index of light guide plate 1 or prism 3 or the like into consideration.

The structure shown in Figure 3 includes cold cathode fluorescent lamp 2 and prism 3 in the vicinity of each of the parallel two edges of light guide plate 1. However, the present invention includes a structure in which cold cathode fluorescent lamp 2 and prism 3 are provided only in the vicinity of one edge of light guide plate 1. However, to raise the luminance of light emitted from light guide plate 1, cold cathode fluorescent lamps 2 and prisms 3 are preferably provided in the vicinity of two or more edges of light guide plate 1.

Furthermore, in the structure shown in Figure 3, first surface 3a of prism 3 is flush with an end surface of light guide plate 1. However, the position of prism 3 is not limited to the position shown in Figure 3. It is essential only that prism 3 is disposed in a region inward from the edge of light guide plate 1. However, to achieve uniform illumination over the entire surface of light guide plate 1, light is preferably incident on light guide plate 1 at a location as close to the edge of light guide plate 1 as possible. Therefore, the outer edge of prism 3 and the edge of light guide plate 1 are preferably aligned with each other.

Figure 4 is a schematic diagram showing a modification of the exemplary embodiment shown in Figure 3. In an illuminating device shown in Figure 4, light guide plate 1 includes slanted end surface 1a. Second surface 3b of prism 3 is in intimate contact with slanted end surface 1a of light guide plate 1. In addition, third surface 3c of prism 3 is perpendicular to a front surface of light guide plate 1. Cold cathode fluorescent lamp 2 is disposed to face first surface 3a of prism 3.

Part of light emitted from cold cathode fluorescent lamp 2 is incident on first surface 3a of prism 3. The incident light on prism 3 is deflected in prism 3 and emitted from second surface 3b. The light emitted from second surface 3b of prism 3 is incident on end surface 1a of light guide plate 1 and then propagates through light guide plate 1 successively reflecting. Then, when the angle of incidence of the light propagating through light guide plate 1 with respect to the interface between light guide plate 1 and air becomes smaller than a critical angle, the light is emitted from light guide plate 1. Thus, the entire surface of light guide plate 1 emits light.

In this modification also, the outer edge of prism 3 and the edge of light guide plate 1 are aligned with each other. In other words, prism 3 is disposed in a region inward from the edge of light guide plate 1. In other words, prism 3 does not project outwardly beyond the edge of light guide plate 1. Therefore, when a plurality of illuminating devices according to this modification is arranged, the end surfaces of light guide plates 1 of the illuminating devices can be brought into contact with each other without any gap.

In the illuminating device shown in Figure 4, there can be a gap between second surface 3b of prism 3 and end surface 1a of light guide plate 1.

The structures described above in this specification are only for illustrative purposes, and the present invention is not limited to the structures described above.

This application claims the priority of Japanese Patent Application No. 2007-208159, which is filed on August 9, 2007, and incorporates the entire disclosure thereof.

## Claims

1. An illuminating device, comprising:
a light guide plate;
a cold cathode fluorescent lamp disposed to face a rear surface of said light guide plate; and
a prism that allows light emitted from said cold cathode fluorescent lamp to be incident on said light guide plate,
wherein said prism is disposed in a region inward from an edge of said light guide plate.

2. The illuminating device according to claim 1, wherein an edge of said prism is aligned with said edge of said light guide plate.

3. The illuminating device according to claim 1 or 2, wherein said cold cathode fluorescent lamp and said prism are disposed along said edge of said light guide plate.

4. The illuminating device according to any one of claims 1 to 3, wherein said prism has a triangular cross section defined by a first surface, a second surface and a third surface,
said first surface of said prism is flush with an end surface of said light guide plate,
said second surface of said prism is opposite the rear surface of said light guide plate, and said third surface of said prism faces said cold cathode fluorescent lamp.

5. The illuminating device according to any one of claims 1 to 3, wherein said light guide plate includes a slanted end surface,
said prism has a triangular cross section defined by a first surface, a second surface and a third surface,
said second surface of said prism is opposite said slanted end surface of said light guide plate,
said third surface of said prism is perpendicular to a front surface of said light guide plate, and
said first surface of said prism faces said cold cathode fluorescent lamp.
